# EUROPÄISCHE PATENTSCHRIFT

(11) **EP 0 467 222 B1**
(45) Veröffentlichungstag und Bekanntmachung des Hinweises auf die Patenterteilung: **12.10.1994**
(21) Anmeldenummer: 91111550.9
(22) Anmeldetag: 11.07.1991
(51) Int. Cl.: B60J 5/04

(54) **Winkelleiste zur Unterbringung von Zusatzteilen an der Rückseite von Türverkleidungen in Kraftfahrzeugen**
Bracket for fixing accessories to the back of door upholstery panel in a motor vehicle
Profilé angulaire pour la fixation des accessoires sur la partie intérieure du capitonnage d'une porte de véhicule

(30) Priorität: 12.07.1990 DE 4022260
(43) Veröffentlichungstag der Anmeldung: 22.01.1992
(73) Patentinhaber: EMPE-WERKE ERNST PELZ GmbH & CO. KG, 82538 Geretsried (DE)
(72) Erfinder: Stickling, Heinz, W-8581 Vorbach (DE)
(74) Vertreter: Goddar, Heinz J., Dr.

(56) Entgegenhaltungen:
- EP-A- 0 146 706
- DE-A- 3 836 511
- US-A- 4 728 143
- PATENT ABSTRACTS OF JAPAN, Band 12, Nr. 419 (M-760)(3266) 8. November 1988 & JP-A-63 154 422 (MAZDA) 27. Juni 1988 & JP-A-63 154 422 ( MAZDA ) 27. Juni 1988

## Beschreibung

Die Erfindung betrifft eine Winkelleiste gemäß dem einleitenden Teil des Anspruches 1.

Es besteht das Bedürfnis, an der Rückseite von Türverkleidungen in Kraftfahrzeugen Einrichtungen zum Einstecken oder Einhängen von Beschlag- oder sonstigen Zusatzteilen vorzusehen, beispielsweise im Bereich der Oberkante der inneren Fläche einer Türverkleidung. Da die Oberkante der Türverkleidung aber eine ins Auge fallende Sichtkante ist, kann sie nicht ohne weiteres aus der Türfläche herausgebogen und mit Löchern, Schlitzen oder ähnlichen Öffnungen zum Einstecken der besagten Zusatzteile versehen werden.

Das Dokument "Patent Abstracts of Japan" vol. 12 No. 419 (M760) (3266), das sich auf die JP-A-63/154 422 bezieht, offenbart eine Winkelleiste der genannte Gattung. Diese Winkelleiste zur Unterbringung von Zusatzteilen an der Rückseite von Türverkleidungen in Kraftfahrzeugen weist eine erste Längsfläche auf, die an der Rückseite der Türverkleidung befestigt ist, und eine von der Türverkleidung zur Karosserie vorstehende zweite Längsfläche, die ein Loch zur Unterbringung von Zusatzteilen aufweist.

Eine ähnliche Winkelleiste ist auch aus der DE-A 38 36 511 bekannt. Hier ist eine Doppeltürkonstruktion offenbart, bei der zwei L-förmige Bügel miteinander verschraubt und jeweils über Schraubverbindungen direkt bzw. indirekt mit zwischengeschalteter Fensterscheibe an der Innentür bzw. Außentür befestigt sind. Hierdurch soll erreicht werden, daß eine Verstärkung des oberen Teils der zweiten Tür bewirkt wird. Es ist aber offensichtlich, daß die gewünschte Verstärkungswirkung in Bezug auf die Innentür nur punktuell ist und weiterhin nur in dem Maße zuverlässig ist, wie insbesondere die Schraubverbindung zwischen den beiden Bügeln die Stabilität gewährleistet.

Es ist daher die Aufgabe der Erfindung, eine Winkelleiste zur Unterbringung von Zusatzteilen an der Rückseite von Türverkleidungen in Kraftfahrzeugen so auszugestalten, daß eine sichere und dauerhafte Verstärkung der Türverkleidung erreicht wird.

Diese Aufgabe wird durch eine Winkelleiste nach Anspruch 1 gelöst. Vorteilhafte Ausgestaltungen sind Gegenstand der Unteransprüche.

Erfindungsgemäß ist vorgesehen, daß die Winkelleiste so ausgebildet ist, daß sie selbst als Verstärkung wirkt, wobei insbesondere in der Winkelleiste Verstärkungsrippen vorgesehen sind. Indem auf die mehrteilige Ausgestaltung verzichtet wird, hat die Winkelleiste selbst eine ausreichende innere Stabilität, so daß sie die oftmals vergleichsweise instabil ausgebildeten Türverkleidungen wirkungsvoll abstützen kann. Die erfindungsgemäße Winkelleiste ist einfach zu fertigen und ohne weiteres an der Rückseite der Türverkleidung zu befestigen. In dem von der Türverkleidung abstehenden Teil der Leiste sind dabei Löcher, Schlitze oder ähnliche Öffnungen zum Einstecken oder Einhängen der Zusatzteile vorgesehen, die im Türinneren benötigt werden, bzw. Clipse zur Befestigung der Türverkleidung an der Karosserie.

Eine bevorzugte Ausführungsform der Erfindung sieht vor, daß die erste Längsfläche auf der Rückseite der Türverkleidung aufgeklebt ist. Die Nachteile einer punktuellen Befestigung werden damit vermieden.

Bevorzugt verläuft die zweite Längsfläche im wesentlichen parallel zur Oberkante der Türverkleidung, wobei sie entweder bündig mit dieser abschließen kann oder mit Abstand unterhalb von ihr angeordnet ist.

Die erfindungsgemäße Winkelleiste besteht vorzugsweise aus dem gleichen Werkstoff wie die Tür selbst, das heißt aus hartgepreßter Holzfasermatte, Holzfaserhartplatte oder dergleichem, besonders gute Versteifungseigenschaften werden allerdings erreicht, wenn diese aus Vollholz oder aus Metall gefertigt ist.

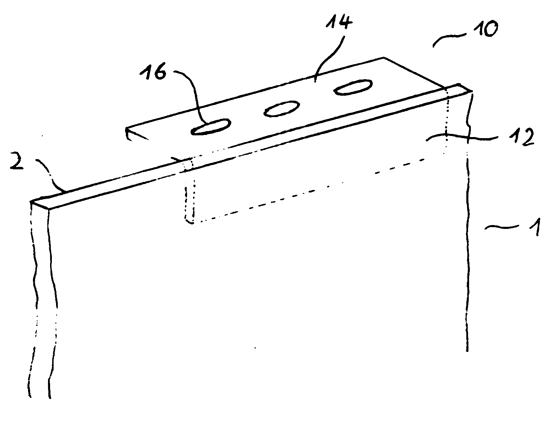

Weitere Vorteile und Merkmale der Erfindung ergeben sich aus der nachfolgenden Beschreibung eines Ausführungsbeispieles der erfindungsgemäßen Winkelleiste anhand der beiliegenden Zeichnung, die einen Ausschnitt der Oberkante einer Türverkleidung in einem Kraftfahrzeug mit daran befestigter erfindungsgemäßer Winkelleiste zeigt.

In der Zeichnung ist ein herausgebrochener Teil einer Türverkleidung 1 dargestellt, die nach oben durch ihre Oberkante 2 begrenzt ist. Daran befestigt ist eine Winkelleiste 10 zu erkennen, die aus einer ersten Längsfläche 12 besteht, die an der Rückseite der Türverkleidung 1 mit einem geeigneten Kleber befestigt ist. Die von der Türverkleidung 1 zur Karosserie vorstehende zweite Längsfläche, die in dem gezeigten Ausführungsbeispiel im rechten Winkel zur ersten Längsfläche 12 steht, ist mit im vorliegenden Fall länglich-ovalen Löchern zum Einhängen und Einstecken von Zusatzteilen versehen, wie beispielsweise Clipsen zur Befestigung der Türverkleidung an der Blechtür. Nicht dargestellt sind Verstärkungsrippen, die die Stabilität der Winkelleiste selbst erhöhen und somit zur Stabilität der Türinnenverkleidung beitragen.

Die in der vorstehenden Beschreibung sowie in den Ansprüchen und der beiliegenden Zeichnungen offenbarten Merkmale der Erfindung können sowohl einzeln als auch in beliebiger Kombination für die Verwirklichung der Erfindung in ihren verschiedenen Ausführungsformen wesentlich sein.

### Bezugszeichenliste

- 1: Türverkleidung
- 2: Oberkente von 1
- 10: Winkelleiste
- 12: Senkrechte Längsfläche von 10
- 14: vorstehende Lägsfläche von 10
- 16: Öffnungen

## Patentansprüche

1. Winkelleiste zur Unterbringung von Zusatzteilen an der Rückseite von Türverkleidungen in Kraftfahrzeugen, welche eine erste Längsfläche (12), die an der Rückseite der Türverkleidung (1) befestigt ist, und eine von der Türverkleidung zur Karosserie vorstehende zweite Längsfläche (14), die Löcher, Schlitze oder ähnliche Öffnungen (16) zur Unterbringung von Zusatzteilen aufweist, dadurch gekennzeichnet, daß in der Winkelleiste Verstärkungsrippen so vorgesehen sind, daß die Winkelleiste als Verstärkung der Türverkleidung wirkt.

2. Winkelleiste nach Anspruch 1, dadurch gekennzeichnet, daß die erste Längsfläche (12) auf der Rückseite der Türverkleidung (1) aufgeklebt ist.

3. Winkelleiste nach Anspruch 1 oder 2, dadurch gekennzeichnet, daß die zweite Längsfläche (14) im wesentlichen parallel zur Oberkante (2) der Türverkleidung (1) verläuft.

4. Winkelleiste nach Anspruch 3, dadurch gekennzeichnet, daß die zweite Längsfläche (14) bündig mit der Oberkante (2) der Türverkleidung (1) abschließt.

5. Winkelleiste nach Anspruch 3, dadurch gekennzeichnet, daß die zweite Längsfläche (14) mit Abstand unterhalb der Oberkante (2) der Türverkleidung (1) angeordnet ist.

6. Winkelleiste nach einem der Ansprüche 1 bis 5, dadurch gekennzeichnet, daß sie aus Streifen hartgepreßter Holzfasermatte, Holzfaserhartplatte oder dergleichen, Holz oder Metall besteht.

## Claims

1. A bracket for fixing accessories to the back of door lining panels in motor vehicles, said bracket comprising a first longitudinal surface (12) fixed to the back of the door lining panel (1), and a second longitudinal surface (14) which projects from the door lining panel towards the vehicle body and which has holes, slits or similar openings (16) for fixing accessories, characterised in that reinforcing ribs are so provided in the bracket that the bracket acts as a door lining panel reinforcement.

2. A bracket according to claim 1, characterised in that the first longitudinal surface (12) is stuck on the back of the door lining panel (1).

3. A bracket according to claim 1 or 2, characterised in that the second longitudinal surface (14) extends substantially parallel to the top edge (2) of the door lining panel (1).

4. A bracket according to claim 3, characterised in that the second longitudinal surface (14) terminates flush with the top edge of the door lining panel (1).

5. A bracket according to claim 3, characterised in that the second longitudinal surface (14) is disposed at a distance beneath the top edge (2) of the door lining panel (1).

6. A bracket according to any one of claims 1 to 5, characterised in that it consists of strips of hard-pressed wood fibre mat, wood fibre hardboard or the like, wood or metal.

## Revendications

1. Profilé angulaire pour la fixation des accessoires sur la partie arrière du capitonnage d'une porte de véhicule automobile, comprenant une première surface longitudinale (12), qui est fixée à la partie arrière du capitonnage de porte (1), et une seconde surface longitudinale (14) qui fait saillie du capitonnage de porte en direction de la carrosserie et qui comporte des trous, des fentes ou des ouvertures analogues (16) destinées à fixer des accessoires, caractérisé en ce que des nervures de renfort sont prévues dans le profilé angulaire, de façon que le profilé angulaire fasse fonction de renfort du capitonnage de porte.

2. Profilé angulaire selon la revendication 1, caractérisé en ce que la première surface longitudinale (12) est collée sur la partie arrière du capitonnage de porte (1).

3. Profilé angulaire selon la revendication 1 ou 2, caractérisé en ce que la seconde surface longitudinale (14) s'étend sensiblement parallèlement au bord supérieur (2) du capitonnage de porte (1).

4. Profilé angulaire selon la revendication 3, caractérisé en ce que la seconde surface longitudinale (14) se termine au ras du bord supérieur (2) du capitonnage de porte (1).

5. Profilé angulaire selon la revendication 3, caractérisé en ce que la seconde surface longitudinale (14) est disposée à distance en dessous du bord supérieur (2) du capitonnage de porte (1).

6. Profilé angulaire selon l'une des revendications 1 à 5, caractérisé en ce qu'il est réalisé dans des bandes de natte de fibres de bois durcie à la presse, de panneau dur de fibres de bois ou analogues de bois ou de métal.
